(19) Europäisches Patentamt
European Patent Office
Office européen des brevets

(11) Numéro de publication: **0 163 559**
**B1**

# (12) FASCICULE DE BREVET EUROPÉEN

(45) Date de publication du fascicule du brevet: **04.11.87**

(51) Int. Cl.⁴: **C 09 K 9/02**

(21) Numéro de dépôt: **85400772.1**

(22) Date de dépôt: **18.04.85**

(54) **Matériau électrochrome organique, son procédé de fabrication et son application à l'affichage.**

(30) Priorité: **20.04.84 FR 8406902**

(43) Date de publication de la demande: **04.12.85 Bulletin 85/49**

(45) Mention de la délivrance du brevet: **04.11.87 Bulletin 87/45**

(84) Etats contractants désignés: **CH DE GB LI**

(56) Documents cité:
**EP-A-0 054 587**

**LE VIDE, LES COUCHES MINCES, vol. 37, novembre/décembre 1982, page 439, Paris, FR; M. GAZARD: "Polymeres electrochromes"**

(73) Titulaire: **COMMISSARIAT A L'ENERGIE ATOMIQUE Etablissement de Caractère Scientifique Technique et Industriel, 31/33, rue de la Fédération, F-75015 Paris (FR)**
Titulaire: **CENTRE NATIONAL DE LA RECHERCHE SCIENTIFIQUE (CNRS), 15, Quai Anatole France, F-75700 Paris (FR)**

(72) Inventeur: **Bidan, Gérard, 3, rue des Trois Epis, F-38100 Grenoble (FR)**
Inventeur: **Deronzier, Alain, 58, Le Hameau Fleuri Montbonnot, F-38230 Saint Ismier (FR)**
Inventeur: **Moutet, Jean- Claude, 105 Cours Jean Jaurès, F-38000 Grenoble (FR)**

(74) Mandataire: **Mongrédien, André, c/o BREVATOME 25, rue de Ponthieu, F-75008 Paris (FR)**

EP 0 163 559 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

**Description**

La présente invention a pour objet un matériau électrochrome organique se présentant notamment sous forme de film, son procédé de fabrication et son application à l'affichage.

On rappelle que l'électrochromisme désigne la proprieté que présentent certains corps de se colorer ou de changer de couleur lorsqu'ils sont soumis à un champ électrique. Ce phénomène est lié à l'apparition ou au déplacement d'une bande d'absorption dans une partie du spectre visible. Lorsque le champ électrique disparaît, le corps retrouve sa transparence ou sa couleur initiale.

Cette propriété trouve une application particulièrement intéressante dans la réalisation de dispositifs d'affichage de caractères ou d'écrans de densité optique variable.

On connaît par le brevet européen EP-A-0 054 587 des dispositifs d'affichage électrochromiques utilisant comme matériau électrochrome une diphtalocyanine telle que la diphtalocyanine de lutécium.

Cependant, l'emploi de tels matériaux électrochromes pose certains problèmes, car ils sont difficiles à déposer sous la forme de films.

On connaît d'autres matériaux électrochromes qui se déposent plus facilement sous la forme de films, par exemple le polypyrrole qui peut être déposé sur une électrode métalique par polymérisation électrochimique, comme cela est décrit dans "Le vide" - Les couches minces, vol. 37 (1982) novembre-décembre, n° 214, p. 439. Cependant les propriétés électrochromiques de tels polymères ne sont pas satisfaisantes.

La présente invention a précisément pour objet un matériau électrochrome organique qui pallie les inconvénients rappelés ci-dessus.

Le matériau électrochrome organique selon l'invention comprend au moins un composé électrochrome organique et il se caractérise en ce que ledit composé électrochrome organique est greffé sur au moins un polymère du pyrrole ou d'un dérivé du pyrrole.

Les polymères du pyrrole peuvent être obtenus en particulier à partir de pyrrole ou d'un dérivé de pyrrole répondant à la formule suivante:

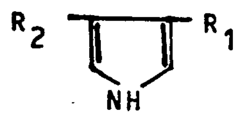

dans laquelle $R^1$ et $R^2$ qui peuvent être identiques ou différents, représentent un atome d'hydrogène, un groupement choisi parmi $NO_2$, $SO_2$, CN, $OCH_3$, Cl, F,

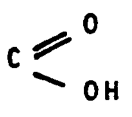 , 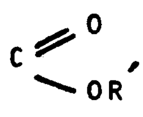 , SCN, OCN, 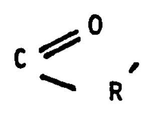 , $SO_2R$, 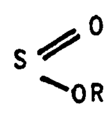 , 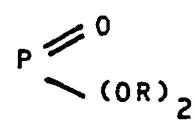 , SR

avec R représentant un radical alkyle ou aryle, ou un radical alkyle ou aryle comportant éventuellement un ou plusieurs substituants choisis dans le groupe comprenant
$NO_2$, $SO_2$, CN, $OCH_3$, Cl, F,

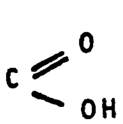 , 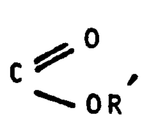 , SCN, OCN, 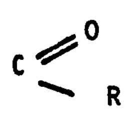 , $SO_2R$, 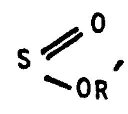 , 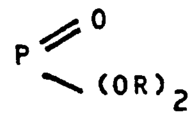 , SR

avec R représentant un radical alkyle ou aryle.

Selon l'invention, on entend également par polymère du pyrrole et de dérivés du pyrrole, des copolymères du pyrrole et de leurs dérivés.

Dans le matériau électrochrome de l'invention, le composé organique électrochrome est avantageusement fixé chimiquement sur l'atome d'azote du noyau pyrrole.

Dans le cas où le matériau électrochrome est constitué par un copolymère, celui-ci peut être obtenu en copolymérisant des molécules de pyrrole sur lesquelles est fixé un composé organique électrochrome avec d'autres molécules de pyrrole sur lesquelles sont fixés d'autres composés organiques électrochromes ou ne comportant pas de composés organiques électrochromes.

La fixation chimique d'un composé organique électrochrome sur le polypyrrole permet d'obtenir un électrochromisme amplifié. Par ailleurs, l'utilisation de matériaux de ce type est avantageuse car on peut profiter de la facilité du groupe pyrrole de polymériser électrochimiquement à la surface d'une électrode pour accrocher à celle-ci, par l'intermédiaire de ce groupe pyrrole (agissant comme une "colle"), des molécules électrochromes. De plus, du fait de leurs propriétés de conduction électronique les polymères du pyrrole permettent de réaliser des films de plus grande épaisseur. Tous les composés électrochromes pouvant se fixer

sur le pyrrole ou ses dérivés sont utilisables pour la réalisation du matériau selon l'invention, comme par exemple le viologène (bipyridinium-4,4' et ses dérivés) et les phtalocyanines électrochromiques comme la diphtalocyanine de lutécium.

A titre indicatif, on peut mentionner les polymères de constitutions suivantes:

a) Dérivés du viologène.

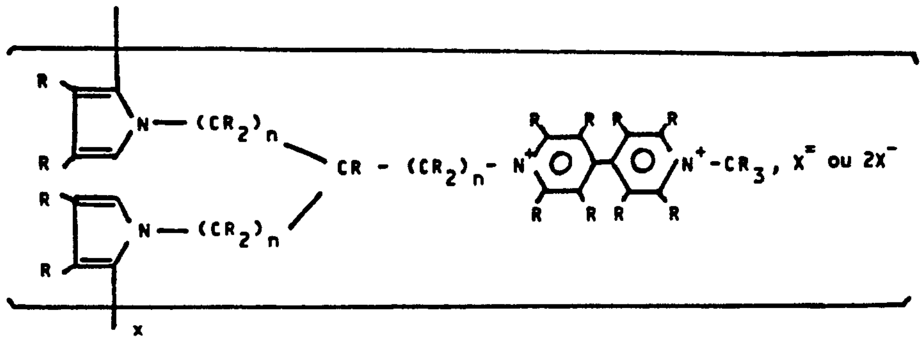

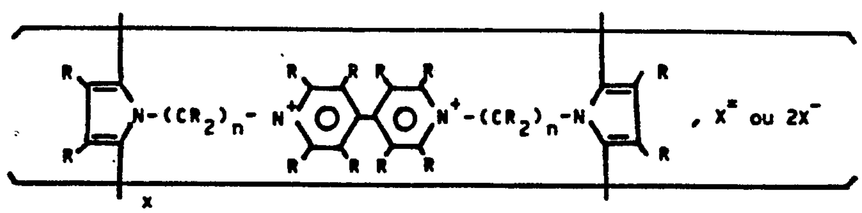

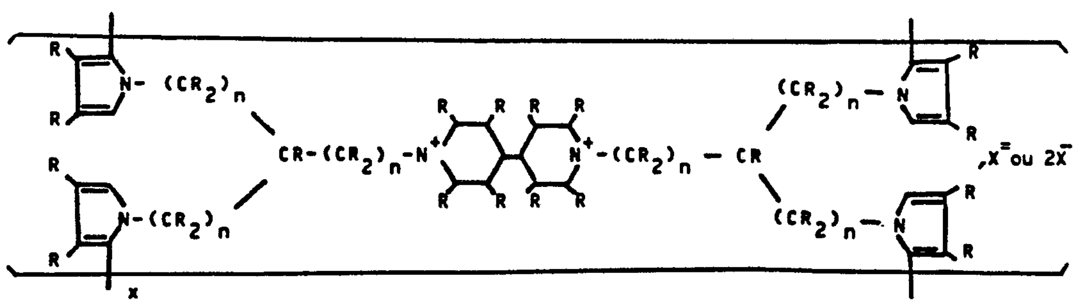

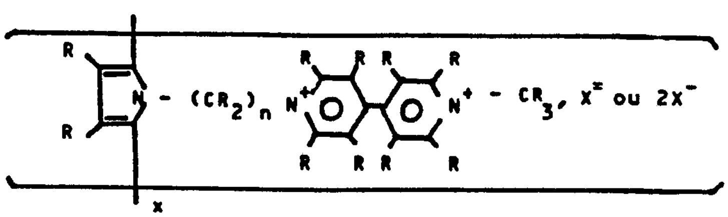

Formules dans lesquelles les radicaux R, qui peuvent être, dans une même molécule, identiques ou différents, représentent l'hydrogène, un radical alkyle, aryl, alkoxy, pyrrolique ou un autre groupe électrochrome et n est un nombre allant de 1 à 15, de préférence au plus égal à 10.

Ces quatre exemples montrent qu'un ou plusieurs radicaux pyrroliques peuvent s'associer à la molécule électrochrome et que ces radicaux pyrroliques peuvent être liés à des chaînes linéaires ou ramifiées.

Ces molécules cationiques sont neutralisées, pour former les matériaux électrochromes selon l'invention, par des espèces anioniques telles que $BF_4^-$, $ClO_4^-$, $PF_6^-$, $R\text{-}SO_3^-$, $SO_4^{=}$, représentés dans les formules précédentes par $X^{=}$ ou $2X^-$.

b) Dérivés de la phtalocyanine.

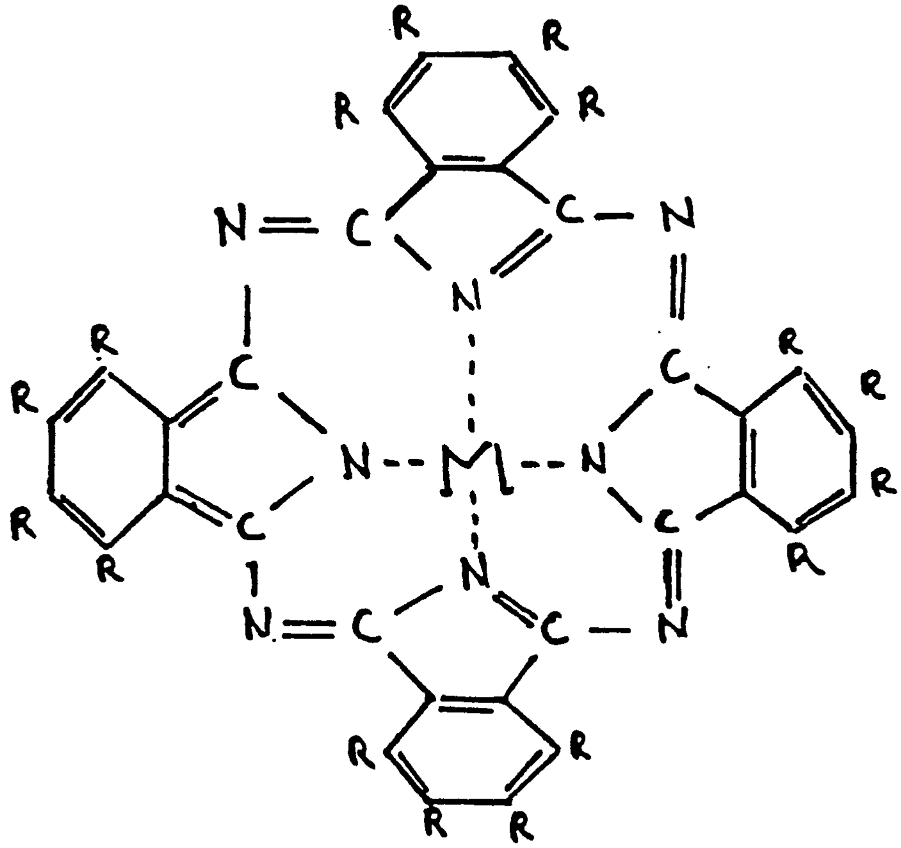

Molécule dans laquelle M est un métal, de préférence de transition. Les radicaux R peuvent être identiques ou différents, comme indiqué précédemment, mais un au moins comporte un groupe pyrrole. Les radicaux R peuvent bien entendu comprendre une autre molécule électrochrome. Ainsi, les radicaux R peuvent être du type:

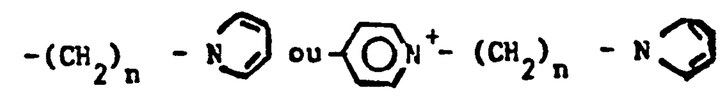

La synthèse de telles phtalocyanines peut s'effectuer de manière classique en partant, par exemple d'un dérivé déterminé de phtalonitrile, de l'anhydride ortophtalique ou de la phtalimide.

La présente invention a aussi pour objet un procédé de fabrication du matériau conforme à l'invention. Plus précisément, ce procédé consiste à déposer un film dudit matériau sur une électrode en faisant passer un courant électrique entre cette électrode et une contre électrode plongées dans un bain comprenant du pyrrole ou un dérivé du pyrrole lié chimiquement à au moins une molécule organique électrochrome, au moins un électrolyte support et au moins un solvant.

Le polymère du pyrrole ou de ses dérivés est ainsi obtenu par oxydation électrochimique; le dépôt du polymère du pyrrole ou de ses dérivés et du ou des composés électrochromes s'effectuant simultanément puisqu'il y a liaison chimique entre le composé électrochrome et le monomère du pyrrole.

Les électrolytes supports susceptibles d'être utilisés pour la confection du bain d'électrolyse sont des sels: perchlorate, hexafluorophosphate, tetrafluoroborate, chlorure, sulfonate, sulfate d'alcalins ou d'ammoniums quaternaires.

Parmi les solvants pouvant être employés, on peut citer l'acétonitrile, le méthanol, l'eau, le diméthylsulfoxyde, le diméthylformamide.

Le procédé conforme à la présente invention permet par conséquent d'obtenir directement un film d'un matériau électrochrome qui présente une bonne adhérence sur l'électrode, cette adhérence peut être améliorée par l'utilisation de la méthode connue de prégreffage de l'électrode par un groupe pyrrole. Dans l'application particulière de l'affichage, l'électrode est constituée d'une plaque de verre recouverte d'une couche conductrice transparente (oxyde d'étain par exemple).

A titre purement illustratif, on va maintenant décrire la préparation d'un matériau électrochrome, le

polytétrafluoroborate de méthyl-1-(pyrrolyl-1-propyl-3)-1'-bipyridinium-4,4' de composition:

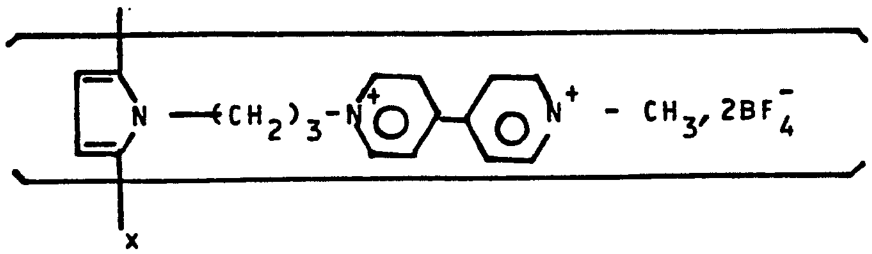

**A. Synthèse du monomère.**

a) En utilisant le diméthylsulfoxyde comme solvant on fait réagir l'alcool bromopropylique sur le sel de potassium du pyrrole selon la réaction:

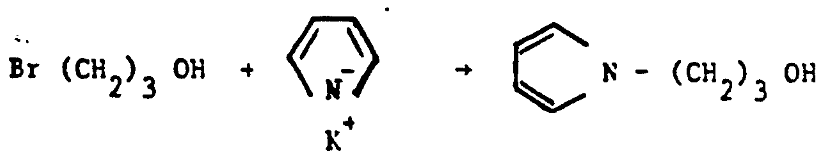

pour obtenir le pyrrolyl-1-propanol-3 avec un rendement de 70 %.

b) Ce dernier composé est traité, en milieu pyridinique, par du chlorure de tosyle selon la réaction:

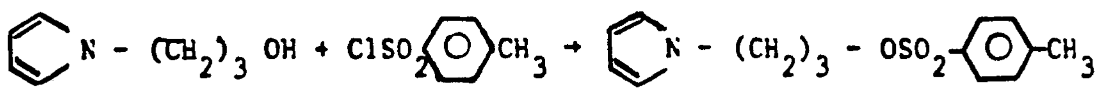

pour obtenir le pyrrolyl-1-propane-tosylate avec un rendement de 70 %.

c) Ce dernier composé est traité par un excès de bipyridine en solution dans le benzène pour conduire à un sel, le paratoluène sulfonate de (pyrrolyl-1-propyl-3) bipyridinium-4,4' qui précipite

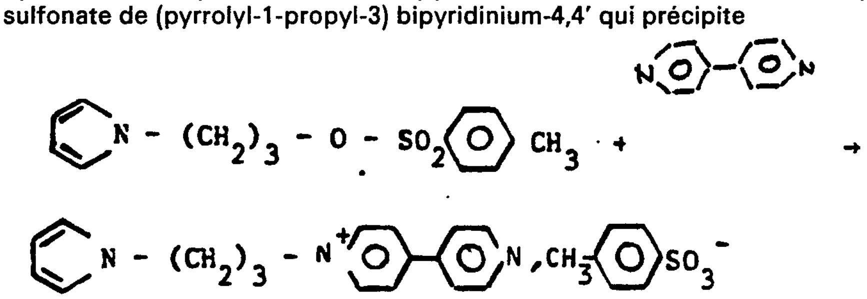

Le rendement de cette réaction est de 60 %.

On introduit ensuite un radical méthyle dans ce composé en lui ajoutant de l'iodure de méthyle. La réaction conduit à un sel mixte (iodure et paratoluène sulfonate de méthyl-1-(pyrrolyl-1-propyl-3)-1'-bipyridinium-4,4' répondant à la formule

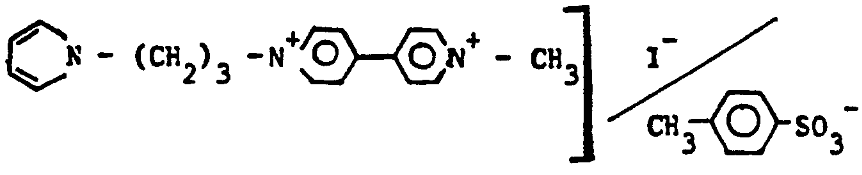

d) Enfin on remplace les anions I⁻ et

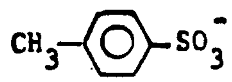

par des anions $BF_4^-$ par passage sur une résine échangeuse d'ions afin d'obtenir le monomère qui servira à préparer le polymère (I). Le rendement d'échange sur résine est ici de 100 %.

**B. Synthèse du polymère** (composé I).

On dissout le monomère obtenu dans l'étape précédente dans de l'acétonitrile à une concentration de $10^{-3}$ mole par litre. Cette solution est additionnée ensuite d'un électrolyte support qui, dans cet exemple, est le tétrafluoroborate de tétraéthyl ammonium, à une concentration de 0,1 mole par litre. On effectue alors la polymérisation électrochimique sous une tension de + 0,9 volt par rapport à une électrode de référence d'argent.

Après dix minutes environ d'électrolyse à la température ambiante, avec un courant de l'ordre de 0,2 à 1 $mA/cm^2$ on obtient, sur une électrode en verre conducteur, un film transparent du matériau électrochrome (I) de couleur jaune, d'épaisseur sensiblement égale à 1 µm. Cette polymérisation s'effectue avec un rendement de l'ordre de 80 % à 100 %.

Sous une tension comprise entre -0,5 et -0,9 V, le polymère passe du jaune au bleu, et reprend sa couleur initiale lorsque la tension revient à des valeurs positives.

**Revendications**

1. Matériau électrochrome organique comprenant au moins un composé électrochrome organique, caractérisé en ce que ce composé électrochrome organique est greffé sur au moins un polymère du pyrrole ou d'un dérivé du pyrrole.

2. Matériau électrochrome organique selon la revendication 1, caractérisé en ce que le composé électrochrome organique est le bipyridinium-4,4' (viologène) ou une phtalocyanine.

3. Matériau organique électrochrome selon la revendication 2, caractérisé en ce que le composé électrochrome organique est la diphtalocyanine de lutécium.

4. Matériau électrochrome organique selon l'une quelconque des revendications 1 ou 2, caractérisé en ce qu'il répond à la formule suivante:

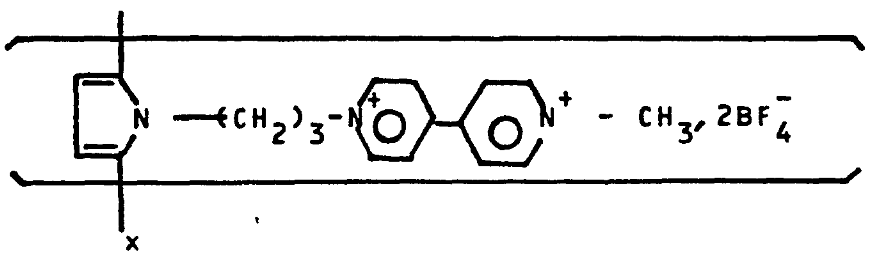

5. Procédé de fabrication d'un matériau électrochrome organique selon l'une quelconque des revendications 1 à 4, caractérisé en ce qu'il consiste à déposer un film dudit matériau sur une électrode en faisant passer un courant électrique entre cette électrode et une contre électrode plongées dans un bain comprenant:
- du pyrrole ou un dérivé de pyrrole liés chimiquement à au moins un composé organique électrochrome,
- au moins un électrolyte-support, et
- au moins un solvant.

6. Procédé selon la revendication 5, caractérisé en ce que l'électrolyte-support est un sel de métal alcalin ou d'ammonium quaternaire choisi dans le groupe comprenant les perchlorates, les hexafluorophosphates, les tétrafluoroborates, les chlorures, les sulfonates et les sulfates de métaux alcalins ou d'ammonium quaternaires.

7. Procédé selon l'une quelconque des revendications 5 et 6, caractérisé en ce que le solvant est choisi dans le groupe comprenant l'acétonitrile, le méthanol, l'eau, le diméthylsulfoxyde et le diméthylformamide.

8. Dispositif d'affichage de caractères comprenant au moins un élément en matériau électrochrome, caractérisé en ce que le matériau électrochrome est un matériau selon l'une quelconque des revendications 1 à 4.

**Patentansprüche**

1. Organisches elektrochromes Material, enthaltend wenigstens eine organische elektrochrome Verbindung, dadurch gekennzeichnet, daß diese organische elektrochrome Verbindung auf Henigstens ein Pyrrolpolymer oder auf ein Pyrrolderivatpolyrer aufgepfropft ist.

2. Organisches elektrochromes Material nach Anspruch 1, dadurch gekennzeichnet, daß die organische elektrochrome Verbindung bipyridin-4-4'(violett erzeugend) oder ein Phtalcyanin ist.

3. Elektrochromes organisches Material nach Anspruch 2, dadurch gekennzeichnet, daß die organische elektrochrome Verbindung das Diphtalcyanin von Lutetium ist.

4. Organisches elektrochromes Material nach einem der Ansprüche 1 oder 2, dadurch gekennzeichnet, daß es der folgenden Formel genügt:

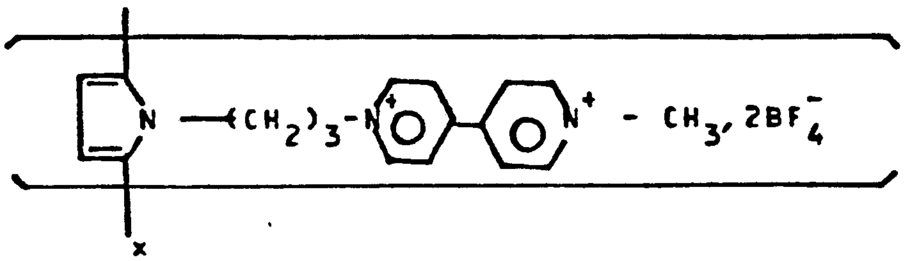

5. Verfahren zur Herstellung eines organischen elektrochromen Materials nach einem der Ansprüche 1 bis 4, dadurch gekennzeichnet, daß es umfaßt: Niederschlagen eines Filmes aus dem Material auf eine Elektrode, indem man einen elektrischen Strom zwischen dieser Elektrode und einer Gegenelektrode fließen läßt, die in ein Bad eingetaucht sind, das enthält:

Pyrrol oder ein Pyrrolderivat, die chemisch an wenigstens eine elektrochrome organische Verbindung gebunden sind,

wenigstens einen Elektrolytträger und

wenigstens ein Lösungsmittel.

6. Verfahren nach Anspruch 5, dadurch gekennzeichnet, daß der Elektrolytträger ein Alkalimetallsalz oder ein quaternäres Amoniumsalz ist, das aus der Gruppe ausgewählt ist, enthaltend die Perchlorate, die Hexafluorphosphate, die Tetrafluorborate, die Chloride, die Sulfonate und die Alkalimetallsulfate oder quaternären Ammoniumsulfate.

7. Verfahren nach einem der Ansprüche 5 und 6, dadurch gekennzeichnet, daß des Lösungsmittel aus der Gruppe ausgewählt ist, die enthält: Acetonitril, Methanol, Wasser, Dimethylsulfoxid und Dimethylformamid.

8. Vorrichtung zum Befestigen von Zeichen, die wenigstens ein Element aus einem elektrochromen Material enthalten, dadurch gekennzeichnet, daß das elektrochrome Material ein Material nach einem der Ansprüche 1 bis 4, ist.

**Claims**

1. An organic electrochromic material comprising at least one organic electrochromic compound, wherein the organic electrochromic compound is grafted onto at least one polymer of pyrrole or a pyrrole derivative.

2. An organic electrochromic material according to claim 1, wherein the organic electrochromic compound is 4,4'-bipyridinium (viologen) or a phthalocyanine.

3. An organic electrochromic material according to claim 2, wherein the organic electrochromic material is lutetium diphthalocyanine.

4. An organic electrochromic material according to either of the claims 1 and 2, wherein it is in accordance with the following formula:

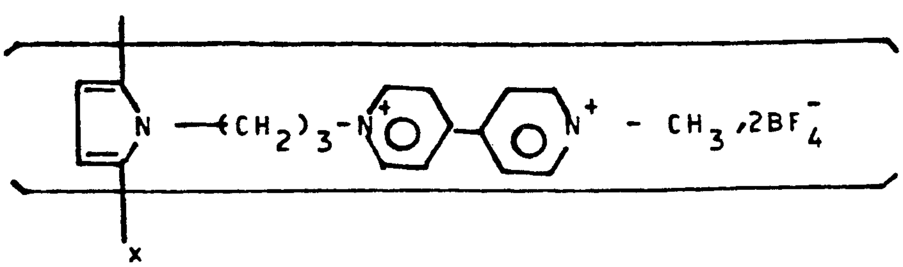

5. A process for producing an organic electrochromic material according to any one of the claims 1 to 4, wherein it consists of depositing a film of said material on an electrode by passing an electric current between said electrode and a counter-electrode immersed in a bath containing pyrrole or a pyrrole derivative chemically connected to at least one organic electrochromic compound, at least one support electrolyte and at least one solvent.

6. A process according to claim 5, wherein the support elektrolyte is a quarternary ammonium or alkali metal salt, chosen from the group including perchlorate, hexafluorophosphates, tetrafluoroborates, chlorides, sulphonates and sulphates of alkali metals or quaternary ammoniums.

7. A process according to either of the claims 5 and 6, wherein the solvent is chosen from the group including acetonitrile, methanol, water, dimethyl sulphoxide and dimethyl formamide.

8. A character display means comprising at least one electrochromic material element, wherein the electrochromic material is a material according to any one of the claims 1 to 4.